# EUROPEAN PATENT APPLICATION

(11) **EP 4 629 573 A1**
(43) Date of publication of application: **08.10.2025**
(21) Application number: 22966787.8
(22) Date of filing: 29.11.2022
(51) Int. Cl.: H04L 27/00, H04W 74/00, H04W 72/04

(54) **SMALL DATA TRANSMISSION (SDT) METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Dehns Germany Partnerschaft mbB
(86) International application number: PCT/CN2022/135176
(87) International publication number: WO 2024/113189

(57) **Abstract**

Provided in the embodiments of the present disclosure are a small data transmission (SDT) method. The method is executed by an access network device. The method comprises: sending configuration information to a terminal, wherein the configuration information is used for indicating a parameter threshold value of a trigger condition for triggering SDT. Here, since the configuration information indicates the parameter threshold value of the trigger condition for triggering SDT, after receiving the configuration information, the terminal can determine, on the basis of the parameter threshold value configured by a network, the trigger condition for triggering SDT. When the trigger condition is met, SDT can be triggered, such that the terminal can execute SDT under the control of a network side; and compared with SDT which is not controlled by the network, the amount of SDT failure situations is reduced, and the transmission reliability of SDT can be improved.

## Description

### TECHNICAL FIELD

The present disclosure relates to, but is not limited to, the field of wireless communication technology, and in particular, to a small data transmission SDT method, apparatus, communication device and storage medium.

### BACKGROUND

In a communication system, a terminal is allowed to perform small data transmission (SDT) in an inactive state (INACTIVE) of radio resource control (RRC) and an idle state (IDLE) of RRC. In this way, the terminal can complete data transmission without entering the RRC connection state, so as to reduce the waste of time and frequency resources, shorten the data transmission delay and save terminal energy consumption. In the related art, when communication is performed based on SDT, there is a problem of low reliability.

### SUMMARY

The embodiments of the present disclosure disclose a small data transmission SDT method, apparatus, communication device and storage medium.

According to a first aspect of the embodiments of the present disclosure, a small data transmission SDT method is provided, wherein the method is performed by an access network device, and the method includes:
sending configuration information to a terminal;
wherein, the configuration information is used for indicating a parameter threshold of a trigger condition for triggering SDT.

In an embodiment, sending configuration information to the terminal includes at least one of the following:
sending the configuration information to the terminal through a terminal-specific message;
   or,
sending the configuration information to the terminal through a broadcast message.

In an embodiment, the configuration information includes bearer indication information, used for indicating a data radio bearer DRB or a signaling radio bearer SRB.

In an embodiment, the configuration information is further used for indicating indication information of whether initiation of SDT is permitted; the SDT includes mobile originated small data transmission MO SDT and/or mobile terminated small data transmission MT SDT.

In an embodiment, the parameter threshold includes at least one of the following:
a reference signal received power RSRP value;
a reference signal received quality RSRQ value; and
a signal to interference and noise ratio SINR value.

In an embodiment, the parameter threshold includes at least one of the following:
a first parameter threshold, wherein the first parameter threshold is a threshold for determining whether to trigger mobile terminated small data transmission MT SDT; and
a second parameter threshold, wherein the second parameter threshold is a threshold for determining whether to trigger mobile originated small data transmission MO SDT.

In an embodiment, the first parameter threshold is equal to the second parameter threshold.

In an embodiment, the parameter threshold is a threshold for determining data transmission through a random access process; and/or the parameter threshold is a threshold for determining data transmission through configure grant CG resources.

In an embodiment, the configuration information is further used for indicating an uplink resource of SDT, the uplink resource is used for initiating initial access, or the uplink resource is used for sending uplink data.

In an embodiment, configuration of the uplink resource includes random access resource information, configure grant resource information and/or demodulation reference signal DMRS information.

According to a second aspect of the embodiments of the present disclosure, a small data transmission SDT method is provided, wherein the method is performed by a terminal, and the method includes:
performing SDT according to configuration information;
wherein, the configuration information is used for indicating a parameter threshold of a trigger condition for triggering SDT.

In an embodiment, the method further includes:
determining the configuration information, wherein determining the configuration information includes at least one of the following:
determining the configuration information according to a predetermined communication protocol;
   and/or,
determining the configuration information according to information received from an access network device.

In an embodiment, receiving the configuration information sent by the access network device includes at least one of the following:
receiving the configuration information sent by the access network device through a terminal-specific message;
receiving the configuration information sent by the access network device through a broadcast message.

In an embodiment, the configuration information includes bearer indication information, used for indicating a data radio bearer DRB or a signaling radio bearer SRB.

In an embodiment, the configuration information further indicates indication information of whether initiation of the SDT is permitted; the SDT includes mobile originated small data transmission MO SDT and/or mobile terminated small data transmission MT SDT.

In an embodiment, the parameter threshold includes at least one of the following:
a reference signal received power RSRP value;
a reference signal received quality RSRQ value; and
a signal to interference and noise ratio SINR value.

In an embodiment, the parameter threshold includes at least one of the following:
a first parameter threshold, wherein the first parameter threshold is a threshold for determining whether to trigger mobile terminated small data transmission MT SDT; and
a second parameter threshold, wherein the second parameter threshold is a threshold for determining whether to trigger mobile originated small data transmission MO SDT.

In an embodiment, the first parameter threshold is equal to the second parameter threshold.

In an embodiment, the parameter threshold is a threshold for determining data transmission through a random access process; and/or, the parameter threshold is a threshold for determining data transmission through configure grant CG resources.

In an embodiment, the configuration information further indicates an uplink resource of SDT, the uplink resource is used for initiating initial access; or the uplink resource is used for sending uplink data.

In an embodiment, configuration of the uplink resource includes random access resource information, configure grant resource information and/or demodulation reference signal DMRS information.

In an embodiment, performing SDT according to configuration information includes:
performing SDT according to a trigger condition determined based on the configuration information.

In an embodiment, the trigger condition includes at least one of the following:
a first trigger condition, including: in response to a signal measurement result of the terminal being greater than or equal to the parameter threshold, performing SDT;
a second trigger condition, including: in response to a bearer of the terminal being configured to allow use of MT SDT and MO SDT and the signal measurement result of the terminal being greater than or equal to the parameter threshold, performing SDT based on an uplink resource corresponding to MO SDT;
a third trigger condition, including: in response to the configuration information configuring an uplink resource and the signal measurement result of the terminal being greater than or equal to the parameter threshold, performing SDT based on the uplink resource;
a fourth trigger condition, including: in response to a bearer of the terminal being configured to allow use of MT SDT and MO SDT, performing SDT based on the uplink resource corresponding to MO SDT; and
a fifth trigger condition, including: in response to the configuration information configuring an uplink resource, performing SDT based on the uplink resource.

In an embodiment, the method further includes:
performing a random access process based on a predetermined random access resource, in response to that a predetermined condition is satisfied,
wherein, the predetermined condition includes one of the following:
   the signal measurement result of the terminal being smaller than or equal to the parameter threshold;
   the number of data transmissions of the terminal being greater than or equal to a quantity threshold; and
   expiration of a predetermined timer.

In an embodiment, the number of transmissions includes one of the following:
the number of random access preamble transmissions during initial data transmission in an SDT procedure; and
the number of initial data transmissions in the SDT procedure.

In an embodiment, a start condition of the timer includes one of the following:
triggering of SDT;
initial uplink data transmission; and
initial random access preamble transmission.

In an embodiment, a stop condition of the timer includes one of the following:
reception of an RRC (Radio Resource Control) state transition instruction;
reception of an acknowledgment message of a random access procedure; and
reception of indication information of data reception completion.

In an embodiment, the method further includes:
ignoring the parameter threshold, in response to configuration of a preset threshold for a data volume of uplink data transmitted using the uplink resource;
wherein, the preset threshold is used to determine the trigger condition for performing SDT based on the uplink resource.

In an embodiment, a measurement signal corresponding to the signal measurement result includes one of the following:
a path loss reference signal;
a signal of a designated measurement object;
a signal of a currently resident cell; and
a signal of a cell initiating SDT.

In an embodiment, a measurement signal corresponding to the signal measurement result is a synchronization signal block (SSB) or a channel state information reference signal (CSI-RS).

According to a third aspect of the embodiments of the present disclosure, a small data transmission SDT apparatus is provided, wherein the apparatus includes:
a sending module, configured to send configuration information to a terminal;
wherein, the configuration information is used for indicating a parameter threshold of a trigger condition for triggering SDT.

According to a fourth aspect of the embodiments of the present disclosure, a small data transmission SDT apparatus is provided, wherein the apparatus includes:
a receiving module, configured to perform SDT according to configuration information;
wherein, the configuration information is used for indicating a parameter threshold of a trigger condition for triggering SDT.

According to a fifth aspect of the embodiments of the present disclosure, a communication device is provided, wherein the communication device includes:
a processor;
a memory, for storing executable instructions of the processor;
wherein, the processor is configured to implement the method described in any embodiment of the present disclosure when running the executable instructions.

According to a sixth aspect of the embodiments of the present disclosure, a computer storage medium is provided, wherein the computer storage medium stores a computer executable program, and the executable program implements the method described in any embodiment of the present disclosure when executed by a processor.

In the embodiments of the present disclosure, configuration information is sent to a terminal; wherein, the configuration information is used for indicating a parameter threshold of a trigger condition for triggering SDT. Here, since the configuration information indicates the parameter threshold of a trigger condition for triggering SDT, after receiving the configuration information, the terminal can determine the trigger condition for triggering SDT based on the parameter threshold configured by the network. When the trigger condition is met, SDT can be triggered. In this way, the terminal can perform SDT under the control of the network side, which reduces the failure of SDT compared with SDT that is not controlled by the network, and can improve the transmission reliability of SDT.

### BRIEF DESCRIPTION OF THE DRAWINGS

FIG. 1 is a schematic diagram of the structure of a wireless communication system according to an example embodiment.
FIG. 2 is a schematic diagram of a flow chart of a small data transmission SDT method according to an example embodiment.
FIG. 3 is a schematic diagram of a flow chart of a small data transmission SDT method according to an example embodiment.
FIG. 4 is a schematic diagram of a flow chart of a small data transmission SDT method according to an example embodiment.
FIG. 5 is a schematic diagram of a flow chart of a small data transmission SDT method according to an example embodiment.
FIG. 6 is a schematic diagram of a flow chart of a small data transmission SDT method according to an example embodiment.
FIG. 7 is a schematic diagram of a flow chart of a small data transmission SDT method according to an example embodiment.
FIG. 8 is a schematic diagram of a flow chart of a small data transmission SDT method according to an example embodiment.
FIG. 9 is a schematic diagram of the structure of a terminal according to an example embodiment.
FIG. 10 is a block diagram of a base station according to an example embodiment.

### DETAILED DESCRIPTION

The example embodiments will be described in detail here, and examples thereof are shown in the accompanying drawings. When the following description refers to the drawings, unless otherwise indicated, the same numbers in different drawings represent the same or similar elements. The implementations described in the following example embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms "one" and "the" used in the embodiments of the present disclosure and the appended claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of••••••" or "when••••••" or "in response to determining that".

For the purpose of simplicity and ease of understanding, the terms used in this article to characterize the size relationship are "greater than" or "less than". However, for those skilled in the art, it can be understood that the term "greater than" also covers the meaning of "greater than or equal to", and "less than" also covers the meaning of "less than or equal to".

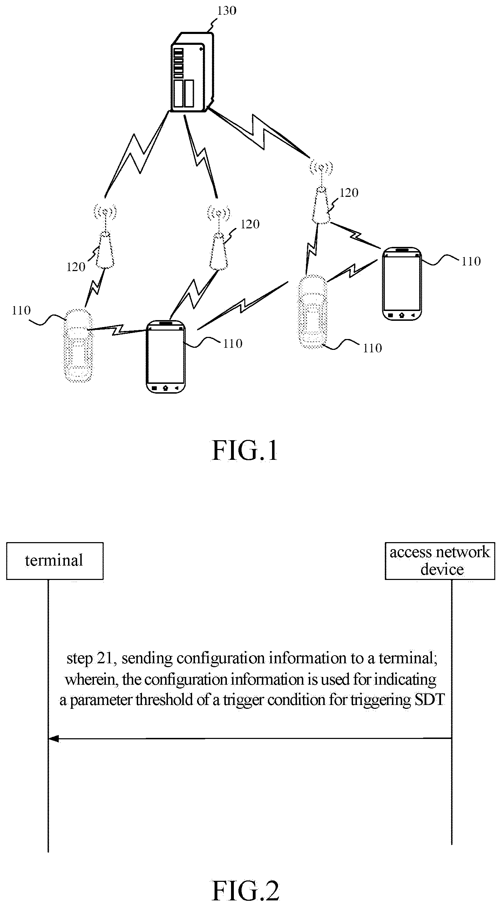

Please refer to FIG. 1, which shows a structural schematic diagram of a wireless communication system provided by an embodiment of the present disclosure. As shown in FIG. 1, the wireless communication system is a communication system based on mobile communication technology, and the wireless communication system may include: a number of user devices 110 and a number of base stations 120.

The user device 110 may be a device that provides voice and/or data connectivity to a user. The user device 110 can communicate with one or more core networks via a radio access network (RAN). The user device 110 may be an Internet of Things user device, such as a sensor device, a mobile phone, and a computer with an Internet of Things user device, for example, it may be a fixed, portable, pocket-sized, handheld, computer built-in, or vehicle-mounted apparatus, for example, a station (STA), a subscriber unit, a subscriber station, a mobile station, a mobile, a remote station, an access point, a remote terminal, an access terminal, a user terminal, a user agent, a user device, or user equipment. Alternatively, the user device 110 may also be a device of an unmanned aerial vehicle. Alternatively, the user device 110 may also be a vehicle-mounted device, such as a driving computer with wireless communication functions, or a wireless user device connected to an external driving computer. Alternatively, the user device 110 may also be a roadside device, such as a street lamp, a signal lamp or other roadside devices with wireless communication functions.

The base station 120 may be a network-side device in a wireless communication system. The wireless communication system may be a 4th generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as New Generation-Radio Access Network (NG-RAN).

The base station 120 may be an evolved base station (eNB) used in a 4G system. Alternatively, the base station 120 may also be a base station (gNB) using a centralized distributed architecture in a 5G system. When the base station 120 uses a centralized distributed architecture, it generally includes a central unit (CU) and at least two distributed units (DU). The central unit is provided with a protocol stack of a packet data convergence protocol (PDCP) layer, a radio link layer control protocol (RLC) layer, and a media access control (MAC) layer; the distributed unit is provided with a protocol stack of a physical (PHY) layer. The specific implementation method of the base station 120 is not limited in the embodiment of the present disclosure.

A wireless connection can be established between the base station 120 and the user device 110 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface can also be a wireless air interface based on the next generation mobile communication network technology standard of 5G.

In some embodiments, an E2E (End to End) connection can also be established between the user devices 110, for example, scenarios such as V2V (vehicle to vehicle) communication, V2I (vehicle to infrastructure) communication and V2P (vehicle to pedestrian) communication in vehicle to everything (V2X) communication.

Here, the above user device can be considered as the terminal device in the following embodiments.

In some embodiments, the wireless communication system may further include a network management device 130.

Several base stations 120 are respectively connected to the network management device 130. The network management device 130 may be a core network device in the wireless communication system, for example, the network management device 130 may be a mobility management entity (MME) in the Evolved Packet Core (EPC). Alternatively, the network management device may also be other core network devices, such as a Serving GateWay (SGW), a Public Data Network GateWay (PGW), a Policy and Charging Rules Function (PCRF) or a Home Subscriber Server (HSS), or the like. The embodiment of the present disclosure does not limit the implementation form of the network management device 130.

In order to facilitate the understanding of those skilled in the art, the embodiment of the present disclosure lists a plurality of implementations to clearly illustrate the technical solution of the embodiment of the present disclosure. Those skilled in the art can understand that, the plurality of embodiments provided in the embodiments of the present disclosure can be executed separately, or can be executed together in combination with the methods of other embodiments in the embodiments of the present disclosure, or can also be executed separately or conjunctively in combination with some methods in other related technologies; the embodiments of the present disclosure do not limit this.

In order to better understand the embodiment of the present disclosure, the following is an explanation of the relevant scenarios of SDT:
In one embodiment, in SDT, according to the resources configured by the network side, when the terminal is in the RRC IDLE or INACTIVE state, the data can be sent directly to the network side in a predetermined manner. The predetermined manner includes one of the following:
sending through Msg3 of the 4-step random access process of initial access (or, it can be called 4-step RACH SDT);
sending through MsgA of the 2-step random access process of initial access (or, it can be called 2-step RACH SDT);
sending through the dedicated uplink Physical Uplink Shared Channel (PUSCH) resources configured by the network (or, it can be called Configure Grant (CG)); and
sending through Preallocated Uplink Resource (PUR) (or, it can be called CG SDT).

Since this process is used for uplink data transmission, it can also be called Mobile Originated (MO) SDT.

In one embodiment, in SDT, the network side sends a downlink paging message to allow the terminal to initiate a connection recovery (or establishment) procedure in the RRC IDLE or RRC INACTIVE state. Thereby, the terminal remains in the RRC IDLE or RRC INACTIVE state and receives the downlink data sent by the network side. This process is called Mobile Terminated (MT) SDT. After triggering MT-SDT, the terminal receives data by restoring the bearer corresponding to MT-SDT.

As shown in FIG. 2, a small data transmission SDT method is provided in this embodiment, wherein the method is performed by an access network device, and the method includes:
step 21, sending configuration information to a terminal;
wherein, the configuration information is used for indicating a parameter threshold of a trigger condition for triggering SDT.

Here, the terminal involved in the present disclosure can be but is not limited to a mobile phone, a wearable device, a vehicle-mounted terminal, a road side unit (RSU), a smart home terminal, an industrial sensor device and/or a medical device, etc. In some embodiments, the terminal may be a Redcap terminal or a new air interface NR terminal of a predetermined version (e.g., an NR terminal of R17).

The access network device involved in the present disclosure may be a base station, and the base station may be various types of base stations, such as a base station of a third generation mobile communication (3G) network, a base station of a fourth generation mobile communication (4G) network, a base station of a fifth generation mobile communication (5G) network, or other evolved base stations.

In one embodiment, the trigger condition includes at least one of the following:
a first trigger condition, including: in response to a signal measurement result of the terminal being greater than or equal to the parameter threshold, performing SDT;
a second trigger condition, including: in response to a bearer of the terminal being configured to allow use of MT SDT and MO SDT and the signal measurement result of the terminal being greater than or equal to the parameter threshold, performing SDT based on an uplink resource corresponding to MO SDT;
a third trigger condition, including: in response to the configuration information configuring an uplink resource and the signal measurement result of the terminal being greater than or equal to the parameter threshold, performing SDT based on the uplink resource;
a fourth trigger condition, including: in response to a bearer of the terminal being configured to allow use of MT SDT and MO SDT, performing SDT based on the uplink resource corresponding to MO SDT; and
a fifth trigger condition, including: in response to the configuration information configuring an uplink resource, performing SDT based on the uplink resource.

In one embodiment, the first trigger condition includes: in response to that a signal measurement result of the terminal is greater than or equal to the parameter threshold, performing MT and/or MO SDT.

In one embodiment, the second trigger condition includes: in response to that a bearer of the terminal is configured to allow use of MT SDT and MO SDT, and the signal measurement result of the terminal is greater than or equal to the parameter threshold, performing MO SDT based on an uplink resource corresponding to MO SDT.

In one embodiment, the third trigger condition includes: in response to that the configuration information has configured an uplink resource, and the signal measurement result of the terminal is greater than or equal to the parameter threshold, performing MO SDT based on the uplink resource.

In one embodiment, the fourth trigger condition includes: in response to that a bearer of the terminal is configured to allow use of MT SDT and MO SDT, performing MO SDT based on the uplink resource corresponding to MO SDT.

In one embodiment, the fifth trigger condition includes: in response to that the configuration information has configured an uplink resource, performing MO SDT based on the uplink resource.

In one embodiment, when the terminal is in an RRC connected state, configuration information is sent to the terminal through an RRC message, wherein the configuration information is used for indicating a parameter threshold of a trigger condition for triggering SDT.

In one embodiment, configuration information is sent to the terminal through a terminal-specific message, wherein the configuration information is used for indicating a parameter threshold of a trigger condition for triggering SDT. For example, the dedicated message may be an RRC release message.

In one embodiment, configuration information is sent to the terminal through a broadcast message, wherein the configuration information is used for indicating a parameter threshold of a trigger condition for triggering SDT. For example, the broadcast message may be a system message SIB1.

In one embodiment, configuration information is sent to the terminal; wherein the configuration information is used for indicating a parameter threshold of a trigger condition for triggering SDT. The parameter threshold includes at least one of the following: a Reference Signal Received Power (RSRP) value, a Reference Signal Received Quality (RSRQ) value, and a Signal to Interference and Noise Ratio (SINR) value.

In one embodiment, configuration information is sent to the terminal, wherein the configuration information is used for indicating a parameter threshold of a trigger condition for triggering SDT. The configuration information includes bearer indication information, used for indicating a Data Radio Bearer (DRB) or a Signaling Radio Bearer (SRB). In this way, the terminal can determine to use DRB or SRB based on the bearer indication information.

In one embodiment, the SDT includes mobile originated small data transmission MO SDT and/or mobile terminated small data transmission MT SDT.

In one embodiment, configuration information is sent to the terminal, wherein the configuration information is used for indicating a parameter threshold of a trigger condition for triggering SDT, and wherein the configuration information includes bearer indication information, used for indicating DRB or SRB.

In some possible implementations, when the configuration information includes bearer indication information, the configuration information may also indicate indication information of whether a mobile originated small data transmission MO SDT (or, uplink SDT) can be initiated. For example, a network side device may send configuration information to a terminal device, wherein the configuration information is used for indicating a parameter threshold of a trigger condition for triggering SDT, and the configuration information may also indicate that a mobile originated small data transmission MO SDT (or, uplink SDT) can be initiated. When the terminal receives the configuration information, the terminal may initiate the mobile originated small data transmission MO SDT according to the trigger condition. While, when the configuration information may also indicate that the mobile originated small data transmission MO SDT (or, uplink SDT) cannot be initiated, the terminal will not initiate the originated small data transmission MO SDT even if the terminal meets the trigger condition.

In one embodiment, configuration information is sent to the terminal, wherein the configuration information is used for indicating a parameter threshold of a trigger condition for triggering SDT; the configuration information includes bearer indication information for indicating DRB or SRB; in response to that the configuration information includes the bearer indication information, the configuration information also indicates indication information of whether the mobile terminated small data transmission MT SDT can be initiated.

In one embodiment, configuration information is sent to the terminal, wherein the configuration information is used for indicating a parameter threshold of a trigger condition for triggering SDT; the configuration information includes bearer indication information of MT SDT for indicating DRB or SRB; in response to that the configuration information includes the bearer indication information, the configuration information also indicates indication information of whether mobile originated small data transmission MO SDT (or, uplink SDT) can be initiated.

In one embodiment, configuration information is sent to the terminal, wherein the configuration information is used for indicating a parameter threshold of a trigger condition for triggering SDT; the parameter threshold includes at least one of the following: a first parameter threshold, wherein the first parameter threshold is a threshold for determining whether to trigger mobile terminated small data transmission MT SDT; and a second parameter threshold, wherein the second parameter threshold is a threshold for determining whether to trigger mobile originated small data transmission MO SDT.

In one embodiment, configuration information is sent to the terminal, wherein the configuration information is used for indicating a parameter threshold of a trigger condition for triggering SDT; the parameter threshold includes at least one of the following: a first parameter threshold, wherein the first parameter threshold is a threshold for determining whether to trigger mobile terminated small data transmission MT SDT; and a second parameter threshold, wherein the second parameter threshold is a threshold for determining whether to trigger mobile originated small data transmission MO SDT; the first parameter threshold is equal to the second parameter threshold.

In one embodiment, configuration information is sent to the terminal, wherein the configuration information is used for indicating a parameter threshold of a trigger condition for triggering SDT; the parameter threshold includes: a first parameter threshold, wherein the first parameter threshold is a threshold for determining whether to trigger mobile terminated small data transmission MT SDT; the parameter threshold is a threshold for determining data transmission through a random access process; and/or the parameter threshold is a threshold for determining data transmission through configure grant CG resources.

In one embodiment, configuration information is sent to the terminal, wherein the configuration information is used for indicating a parameter threshold of a trigger condition for triggering SDT; the parameter threshold includes: a second parameter threshold, wherein the second parameter threshold is a threshold for determining whether to trigger mobile originated small data transmission MO SDT; the parameter threshold is a threshold for determining data transmission through a random access process; and/or the parameter threshold is a threshold for determining data transmission through configure grant CG resources.

In one embodiment, In one embodiment, configuration information is sent to the terminal, wherein the configuration information is used for indicating a parameter threshold of a trigger condition for triggering SDT; the configuration information is also used for indicating an uplink resource of MO SDT; wherein the uplink resource is used for initiating initial access, or the uplink resource is used for sending uplink data.

In one embodiment, configuration information is sent to the terminal; wherein the configuration information is used for indicating at least one of the following: a parameter threshold of a trigger condition for triggering SDT; an uplink resource of SDT; the uplink resource being used for initiating initial access; and the uplink resource being used for sending uplink data.

In one embodiment, configuration of the uplink resource includes random access resource information, configure grant resource information and/or Demodulation Reference Signal (DMRS) information. For example, the random access resource information may be information of a physical random access channel (PRACH) time-frequency resource and/or a PRACH code domain resource (e.g., a preamble code number). The configure grant resource information may be a physical uplink shared channel (PUSCH) time-frequency resource or a PUSCH code domain resource (e.g., a radio network temporary identifier (RNTI)).

In the embodiment of the present disclosure, configuration information is sent to a terminal; wherein, the configuration information is used for indicating a parameter threshold of a trigger condition for triggering SDT. Here, since the configuration information indicates the parameter threshold of a trigger condition for triggering SDT, after receiving the configuration information, the terminal can determine the trigger condition for triggering SDT based on the parameter threshold configured by the network. When the trigger condition is met, SDT can be triggered. In this way, the terminal can perform SDT under the control of the network side, which reduces the failure of SDT compared with SDT that is not controlled by the network, and can improve the transmission reliability of SDT.

It should be noted that, those skilled in the art can understand that the method provided in the embodiment of the present disclosure can be executed alone or together with some methods in the embodiment of the present disclosure or some methods in related technologies.

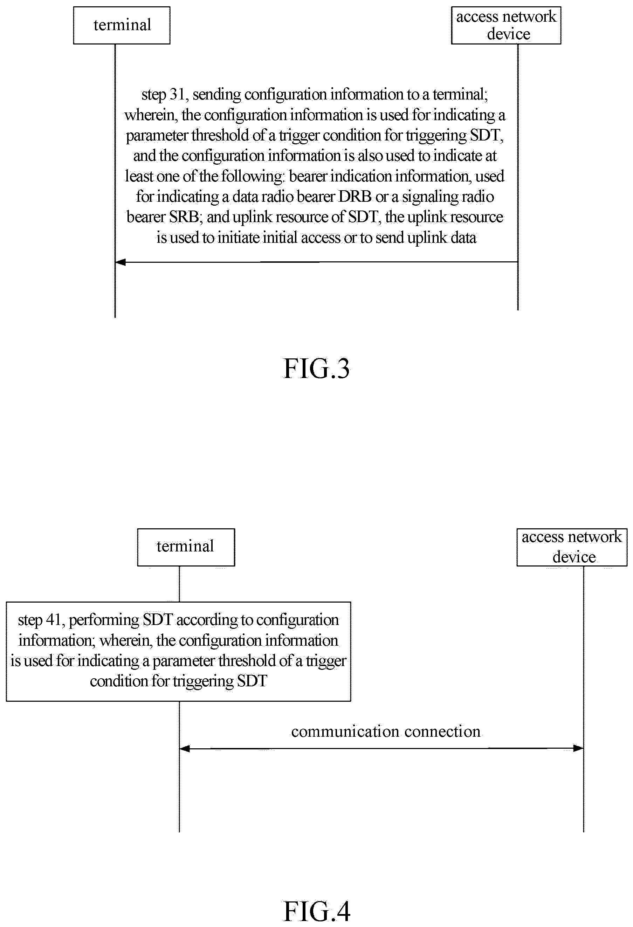

As shown in FIG. 3, a small data transmission SDT method is provided in this embodiment, wherein the method is performed by an access network device, and the method includes:
step 31, sending configuration information to a terminal; wherein, the configuration information is used for indicating a parameter threshold of a trigger condition for triggering SDT, and the configuration information is also used for indicating at least one of the following:
bearer indication information, used for indicating a data radio bearer DRB or a signaling radio bearer SRB; and
the uplink resource of SDT, wherein the uplink resource is used for initiating initial access or sending uplink data.

In one embodiment, configuration information is sent to the terminal; wherein the configuration information is used for indicating the parameter threshold of the trigger condition for triggering MO SDT, and the configuration information is also used for indicating at least one of the following: bearer indication information, used for indicating a data radio bearer DRB or a signaling radio bearer SRB; and the uplink resource of MO SDT, wherein the uplink resource is used for initiating initial access or sending uplink data.

It should be noted that the uplink resource is not limited to the uplink resource of MO SDT, but can also be the uplink resource of MT SDT, or other uplink resources, which is not limited in this disclosure.

In one embodiment, configuration of the uplink resource includes random access resource information, configure grant resource information and/or Demodulation Reference Signal (DMRS) information. For example, the random access resource information may be information of a physical random access channel (PRACH) time-frequency resource and/or a PRACH code domain resource (e.g., a preamble code number). The configure grant resource information may be a physical uplink shared channel (PUSCH) time-frequency resource or a PUSCH code domain resource (e.g., a radio network temporary identifier (RNTI)).

It should be noted that, those skilled in the art can understand that the method provided in the embodiment of the present disclosure can be executed alone or together with some methods in the embodiment of the present disclosure or some methods in related technologies.

As shown in FIG. 4, a small data transmission SDT method is provided in the present embodiment, wherein the method is performed by a terminal, and the method includes:
step 41, performing SDT according to configuration information;
wherein, the configuration information is used for indicating a parameter threshold of a trigger condition for triggering SDT.

Here, the terminal involved in the present disclosure can be but is not limited to a mobile phone, a wearable device, a vehicle-mounted terminal, a road side unit (RSU), a smart home terminal, an industrial sensor device and/or a medical device, etc. In some embodiments, the terminal may be a Redcap terminal or a new air interface NR terminal of a predetermined version (e.g., an NR terminal of R17).

The access network device involved in the present disclosure may be a base station, and the base station may be various types of base stations, such as a base station of a third generation mobile communication (3G) network, a base station of a fourth generation mobile communication (4G) network, a base station of a fifth generation mobile communication (5G) network, or other evolved base stations.

In one embodiment, the configuration information is determined according to a predetermined communication protocol. According to the configuration information, SDT is performed; wherein the configuration information is used for indicating a parameter threshold of a trigger condition for triggering SDT.

In one embodiment, the configuration information sent by the access network device is received. According to the configuration information, SDT is performed; wherein the configuration information is used for indicating a parameter threshold of a trigger condition for triggering SDT.

In one embodiment, the trigger condition includes at least one of the following:
a first trigger condition, including: in response to a signal measurement result of the terminal being greater than or equal to the parameter threshold, performing SDT;
a second trigger condition, including: in response to a bearer of the terminal being configured to allow use of MT SDT and MO SDT and the signal measurement result of the terminal being greater than or equal to the parameter threshold, performing SDT based on an uplink resource corresponding to MO SDT;
a third trigger condition, including: in response to the configuration information configuring an uplink resource and the signal measurement result of the terminal being greater than or equal to the parameter threshold, performing SDT based on the uplink resource;
a fourth trigger condition, including: in response to a bearer of the terminal being configured to allow use of MT SDT and MO SDT, performing SDT based on the uplink resource corresponding to MO SDT; and
a fifth trigger condition, including: in response to the configuration information configuring an uplink resource, performing SDT based on the uplink resource.

In one embodiment, the first trigger condition includes: in response to that a signal measurement result of the terminal is greater than or equal to the parameter threshold, performing MT and/or MO SDT.

In one embodiment, the second trigger condition includes: in response to that a bearer of the terminal is configured to allow use of MT SDT and MO SDT, and the signal measurement result of the terminal is greater than or equal to the parameter threshold, performing MO SDT based on an uplink resource corresponding to MO SDT.

In one embodiment, the third trigger condition includes: in response to that the configuration information has configured an uplink resource, and the signal measurement result of the terminal is greater than or equal to the parameter threshold, performing MO SDT based on the uplink resource.

In one embodiment, the fourth trigger condition includes: in response to that a bearer of the terminal is configured to allow use of MT SDT and MO SDT, performing MO SDT based on the uplink resource corresponding to MO SDT.

In one embodiment, the fifth trigger condition includes: in response to that the configuration information has configured an uplink resource, performing MO SDT based on the uplink resource.

In one embodiment, when the terminal is in an RRC connected state, the configuration information sent by the access network device is received through an RRC message, wherein the configuration information is used for indicating a parameter threshold of a trigger condition for triggering SDT.

In one embodiment, the configuration information sent by the access network device is received through a terminal-specific message, wherein the configuration information is used for indicating a parameter threshold of a trigger condition for triggering SDT. For example, the dedicated message may be an RRC release message.

In one embodiment, the configuration information sent by the access network device is received through a broadcast message, wherein the configuration information is used for indicating a parameter threshold of a trigger condition for triggering SDT. For example, the broadcast message may be a system message SIB1.

In one embodiment, the configuration information sent by the access network device is received; wherein the configuration information is used for indicating a parameter threshold of a trigger condition for triggering SDT. The parameter threshold includes at least one of the following: a Reference Signal Received Power (RSRP) value, a Reference Signal Received Quality (RSRQ) value, and a Signal to Interference and Noise Ratio (SINR) value.

In one embodiment, the configuration information sent by the access network device is received; wherein the configuration information is used for indicating a parameter threshold of a trigger condition for triggering SDT. The configuration information includes bearer indication information, used for indicating a Data Radio Bearer (DRB) or a Signaling Radio Bearer (SRB). In this way, the terminal can determine to use DRB or SRB based on the bearer indication information.

In one embodiment, the configuration information also indicates indication information of whether the SDT can be initiated; the SDT includes mobile originated small data transmission MO SDT and/or mobile terminated small data transmission MT SDT.

In one embodiment, the configuration information sent by the access network device is received; wherein the configuration information is used for indicating a parameter threshold of a trigger condition for triggering SDT, the configuration information includes bearer indication information, used for indicating DRB or SRB; in response to that the configuration information includes the bearer indication information, the configuration information also indicates indication information of whether mobile originated small data transmission MO SDT (or, uplink SDT) can be initiated.

In one embodiment, the configuration information sent by the access network device is received; wherein the configuration information is used for indicating a parameter threshold of a trigger condition for triggering SDT; the configuration information includes bearer indication information for indicating DRB or SRB; in response to that the configuration information includes the bearer indication information, the configuration information also indicates indication information of whether the mobile terminated small data transmission MT SDT can be initiated.

In one embodiment, the configuration information sent by the access network device is received; wherein the configuration information is used for indicating a parameter threshold of a trigger condition for triggering SDT; the configuration information includes the bearer indication information of MO SDT, for indicating DRB or SRB; in response to that the configuration information includes the bearer indication information, the configuration information also indicates indication information of whether the mobile terminated small data transmission MT SDT can be initiated.

In one embodiment, the configuration information sent by the access network device is received; wherein the configuration information is used for indicating a parameter threshold of a trigger condition for triggering SDT; the parameter threshold includes at least one of the following: a first parameter threshold, wherein the first parameter threshold is a threshold for determining whether to trigger mobile terminated small data transmission MT SDT; and a second parameter threshold, wherein the second parameter threshold is a threshold for determining whether to trigger mobile originated small data transmission MO SDT.

In one embodiment, the configuration information sent by the access network device is received; wherein the configuration information is used for indicating a parameter threshold of a trigger condition for triggering SDT; the parameter threshold includes at least one of the following: a first parameter threshold, wherein the first parameter threshold is a threshold for determining whether to trigger mobile terminated small data transmission MT SDT; and a second parameter threshold, wherein the second parameter threshold is a threshold for determining whether to trigger mobile originated small data transmission MO SDT; the first parameter threshold is equal to the second parameter threshold.

In one embodiment, the configuration information sent by the access network device is received; wherein the configuration information is used for indicating a parameter threshold of a trigger condition for triggering SDT; the parameter threshold includes: a first parameter threshold, wherein the first parameter threshold is a threshold for determining whether to trigger mobile terminated small data transmission MT SDT; the first parameter threshold is a threshold for determining data transmission through a random access process; and/or the first parameter threshold is a threshold for determining data transmission through configure grant CG resources.

In one embodiment, the configuration information sent by the access network device is received; wherein the configuration information is used for indicating a parameter threshold of a trigger condition for triggering SDT; the parameter threshold includes: a second parameter threshold, wherein the second parameter threshold is a threshold for determining whether to trigger mobile originated small data transmission MO SDT; the second parameter threshold is a threshold for determining data transmission through a random access process; and/or the parameter threshold is a threshold for determining data transmission through configure grant CG resources. The first parameter threshold can be the same as the second parameter threshold, that is, the relevant configuration parameters for determining whether to initiate the MT-SDT process and the relevant configuration parameters for determining whether to initiate the MO SDT process can be configured through the same signaling, and the configuration parameter can be, for example, the parameter threshold or bearer indication.

In one embodiment, the configuration information sent by the access network device is received; wherein the configuration information is used for indicating a parameter threshold of a trigger condition for triggering SDT; the configuration information is also used for indicating an uplink resource of MO SDT; wherein the uplink resource is used for initiating initial access, or the uplink resource is used for sending uplink data.

In one embodiment, the configuration information sent by the access network device is received; wherein the configuration information is used for indicating at least one of the following: a parameter threshold of a trigger condition for triggering SDT; an uplink resource of SDT; the uplink resource being used for initiating initial access; and the uplink resource being used for sending uplink data.

In one embodiment, configuration of the uplink resource includes random access resource information, configure grant resource information and/or Demodulation Reference Signal (DMRS) information. For example, the random access resource information may be information of a physical random access channel (PRACH) time-frequency resource and/or a PRACH code domain resource (e.g., a preamble code number). The configure grant resource information may be a physical uplink shared channel (PUSCH) time-frequency resource or a PUSCH code domain resource (e.g., a radio network temporary identifier (RNTI)).

In one embodiment, SDT is performed according to a trigger condition determined based on the configuration information; wherein the configuration information is used for indicating a parameter threshold of a trigger condition for triggering SDT.

In an embodiment, the trigger condition includes at least one of the following:
a first trigger condition, including: in response to a signal measurement result of the terminal being greater than or equal to the parameter threshold, performing SDT;
a second trigger condition, including: in response to a bearer of the terminal being configured to allow use of MT SDT and MO SDT and the signal measurement result of the terminal being greater than or equal to the parameter threshold, performing SDT based on an uplink resource corresponding to MO SDT;
a third trigger condition, including: in response to the configuration information configuring an uplink resource and the signal measurement result of the terminal being greater than or equal to the parameter threshold, performing SDT based on the uplink resource;
a fourth trigger condition, including: in response to a bearer of the terminal being configured to allow use of MT SDT and MO SDT, performing SDT based on the uplink resource corresponding to MO SDT; and
a fifth trigger condition, including: in response to the configuration information configuring an uplink resource, performing SDT based on the uplink resource.

In one embodiment, the measurement signal corresponding to the signal measurement result is a synchronization signal block (SSB) or a channel state information reference signal (CSI-RS).

In one embodiment, SDT is performed according to a trigger condition determined based on the configuration information; wherein the configuration information is used for indicating a parameter threshold of a trigger condition for triggering SDT. In response to that a predetermined condition is satisfied, a random access process based on a predetermined random access resource is performed; wherein, the predetermined condition includes one of the following: the signal measurement result of the terminal being smaller than or equal to the parameter threshold; the number of data transmissions of the terminal being greater than or equal to a quantity threshold; and expiration of a predetermined timer.

In an embodiment, the number of transmissions includes one of the following:
the number of random access preamble transmissions during initial data transmission in an SDT procedure; and
the number of initial data transmissions in the SDT procedure.

It should be noted that, if the initial data transmission is unsuccessful and results in multiple retransmissions, the random access preamble will be sent multiple times.

It should be noted that, if the initial data transmission is unsuccessful, multiple retransmissions will be caused. For example, multiple initial data are sent through CG resources.

In an embodiment, a start condition of the timer includes one of the following:
triggering of SDT;
initial uplink data transmission; and
initial random access preamble transmission.

In an embodiment, a stop condition of the timer includes one of the following:
reception of an RRC (Radio Resource Control) state transition instruction;
reception of an acknowledgment message of a random access procedure; and
reception of indication information of data reception completion.

In the embodiment, the state transition instruction may be sent through one of the following messages: the RRC release message, RRC configuration message, and RRC recovery message.

In the embodiment, the confirmation message may be Msg4 for 4-step random access, or MsgB for 2-step random access.

In the embodiment, for data sent using CG resources, the indication information may be C-RNTI PDCCH indication information.

In one embodiment, a measurement signal corresponding to the signal measurement result includes one of the following:
a path loss reference signal;
a signal of a designated measurement object;
a signal of a currently resident cell; and
a signal of a cell initiating SDT.

In the embodiment, the designated measurement object may be a service measurement object.

In one embodiment, the measurement signal corresponding to the signal measurement result is a synchronization signal block SSB or a channel state information reference signal CSI-RS.

In one embodiment, the configuration information sent by the access network device is received; wherein, the configuration information is used for indicating a parameter threshold of a trigger condition for triggering SDT. In response to configuration of a preset threshold for a data volume of uplink data transmitted using the uplink resource, the parameter threshold is ignored; wherein, the preset threshold is used to determine the trigger condition for performing SDT based on the uplink resource.

In the embodiment of the present disclosure, SDT is performed according to the configuration information; wherein the configuration information is used for indicating a parameter threshold of a trigger condition for triggering SDT. Here, since the configuration information indicates the parameter threshold of a trigger condition for triggering SDT, after determining the configuration information, the terminal can determine the trigger condition for triggering SDT based on the parameter threshold configured by the network. When the trigger condition is met, SDT can be triggered. In this way, the terminal can perform SDT under the control of the network side, which reduces the failure of SDT compared with SDT that is not controlled by the network, and can improve the transmission reliability of SDT.

It should be noted that, those skilled in the art can understand that the method provided in the embodiment of the present disclosure can be executed alone or together with some methods in the embodiment of the present disclosure or some methods in related technologies.

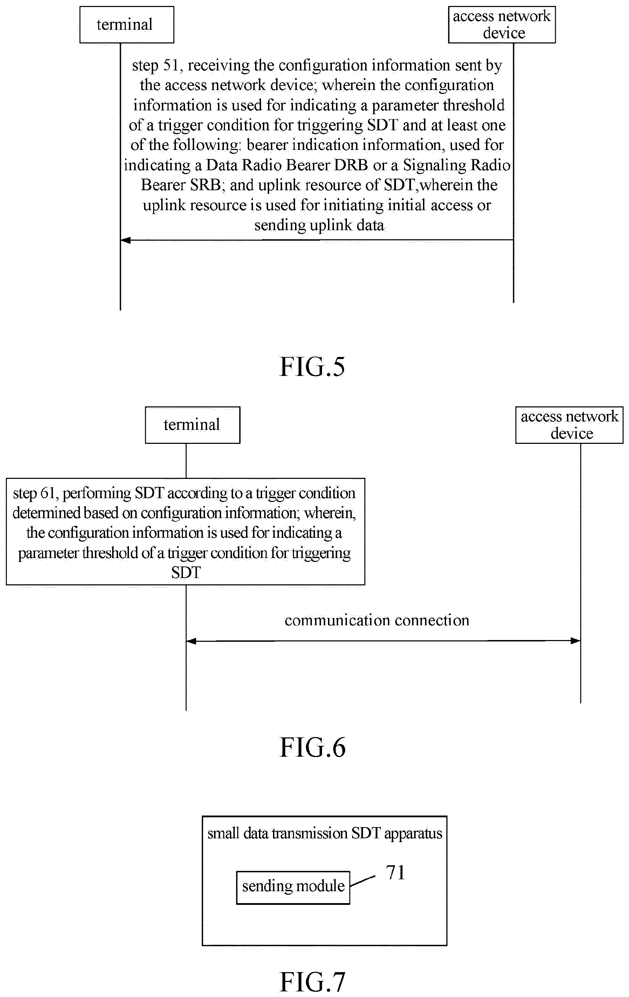

As shown in FIG. 5, a small data transmission SDT method is provided in the present embodiment, wherein the method is performed by a terminal, and the method includes:
step 51, receiving the configuration information sent by the access network device; wherein the configuration information is used for indicating a parameter threshold of a trigger condition for triggering SDT and at least one of the following:
bearer indication information, used for indicating a Data Radio Bearer DRB or a Signaling Radio Bearer SRB; and
the uplink resource of SDT, wherein the uplink resource is used for initiating initial access or sending uplink data.

In one embodiment, the configuration information sent by the access network device is received; wherein the configuration information is used for indicating a parameter threshold of a trigger condition for triggering MO SDT, and the configuration information is also used for indicating at least one of the following: bearer indication information, used for indicating a Data Radio Bearer DRB or a Signaling Radio Bearer SRB; and the uplink resource of MO SDT, wherein the uplink resource is used for initiating initial access or sending uplink data.

It should be noted that the uplink resource is not limited to the uplink resource of MO SDT, but can also be the uplink resource of MT SDT, which is not limited here.

In one embodiment, configuration of the uplink resource includes random access resource information, configure grant resource information and/or Demodulation Reference Signal (DMRS) information. For example, the random access resource information may be information of a physical random access channel (PRACH) time-frequency resource and/or a PRACH code domain resource (e.g., a preamble code number). The configure grant resource information may be a physical uplink shared channel (PUSCH) time-frequency resource or a PUSCH code domain resource (e.g., a radio network temporary identifier (RNTI)).

It should be noted that, those skilled in the art can understand that the method provided in the embodiment of the present disclosure can be executed alone or together with some methods in the embodiment of the present disclosure or some methods in related technologies.

As shown in FIG. 6, a small data transmission SDT method is provided in the present embodiment, wherein the method is performed by a terminal, and the method includes:
step 61, performing SDT according to a trigger condition determined based on configuration information; wherein, the configuration information is used for indicating a parameter threshold of a trigger condition for triggering SDT.

In one embodiment, the configuration information is determined according to a predetermined communication protocol. According to the configuration information, SDT is performed; wherein the configuration information is used for indicating a parameter threshold of a trigger condition for triggering SDT.

In one embodiment, the configuration information sent by the access network device is received. According to the configuration information, SDT is performed; wherein the configuration information is used for indicating a parameter threshold of a trigger condition for triggering SDT.

In one embodiment, the trigger condition includes at least one of the following:
a first trigger condition, including: in response to a signal measurement result of the terminal being greater than or equal to the parameter threshold, performing SDT;
a second trigger condition, including: in response to a bearer of the terminal being configured to allow use of MT SDT and MO SDT and the signal measurement result of the terminal being greater than or equal to the parameter threshold, performing SDT based on an uplink resource corresponding to MO SDT;
a third trigger condition, including: in response to the configuration information configuring an uplink resource and the signal measurement result of the terminal being greater than or equal to the parameter threshold, performing SDT based on the uplink resource;
a fourth trigger condition, including: in response to a bearer of the terminal being configured to allow use of MT SDT and MO SDT, performing SDT based on the uplink resource corresponding to MO SDT; and
a fifth trigger condition, including: in response to the configuration information configuring an uplink resource, performing SDT based on the uplink resource.

In an embodiment, a measurement signal corresponding to the signal measurement result includes one of the following:
a path loss reference signal;
a signal of a designated measurement object;
a signal of a currently resident cell; and
a signal of a cell initiating SDT.

In an embodiment, a measurement signal corresponding to the signal measurement result is a synchronization signal block (SSB) or a channel state information reference signal (CSI-RS).

In one embodiment, the first trigger condition includes: in response to that a signal measurement result of the terminal is greater than or equal to the parameter threshold, performing MT and/or MO SDT.

In one embodiment, the second trigger condition includes: in response to that a bearer of the terminal is configured to allow use of MT SDT and MO SDT, and the signal measurement result of the terminal is greater than or equal to the parameter threshold, performing MO SDT based on an uplink resource corresponding to MO SDT.

In one embodiment, the third trigger condition includes: in response to that the configuration information has configured an uplink resource, and the signal measurement result of the terminal is greater than or equal to the parameter threshold, performing MO SDT based on the uplink resource.

In one embodiment, the fourth trigger condition includes: in response to that a bearer of the terminal is configured to allow use of MT SDT and MO SDT, performing MO SDT based on the uplink resource corresponding to MO SDT.

In one embodiment, the fifth trigger condition includes: in response to that the configuration information has configured an uplink resource, performing MO SDT based on the uplink resource.

In one embodiment, SDT is performed according to a trigger condition determined based on the configuration information; wherein the configuration information is used for indicating a parameter threshold of a trigger condition for triggering SDT. In response to that a predetermined condition is satisfied, a random access process based on a predetermined random access resource is performed; wherein, the predetermined condition includes one of the following: the signal measurement result of the terminal being smaller than or equal to the parameter threshold; the number of data transmissions of the terminal being greater than or equal to a quantity threshold; and expiration of a predetermined timer.

In an embodiment, the number of transmissions includes one of the following:
the number of random access preamble transmissions during initial data transmission in an SDT procedure; and
the number of initial data transmissions in the SDT procedure.

In an embodiment, a start condition of the timer includes one of the following:
triggering of SDT;
initial uplink data transmission; and
initial random access preamble transmission.

In an embodiment, a stop condition of the timer includes one of the following:
reception of an RRC Radio Resource Control state transition instruction;
reception of an acknowledgment message of a random access procedure; and
reception of indication information of data reception completion.

In one embodiment, in response to configuration of a preset threshold for a data volume of uplink data transmitted using the uplink resource, the parameter threshold is ignored; wherein, the preset threshold is used to determine the trigger condition for performing SDT based on the uplink resource.

It should be noted that, those skilled in the art can understand that the method provided in the embodiment of the present disclosure can be executed alone or together with some methods in the embodiment of the present disclosure or some methods in related technologies.

As shown in FIG. 7, a small data transmission SDT apparatus is provided in the embodiment of the present disclosure, wherein the apparatus includes:
a sending module 71, configured to send configuration information to a terminal;
wherein, the configuration information is used for indicating a parameter threshold of a trigger condition for triggering SDT.

It should be noted that, those skilled in the art can understand that the method provided in the embodiment of the present disclosure can be executed alone or together with some methods in the embodiment of the present disclosure or some methods in related technologies.

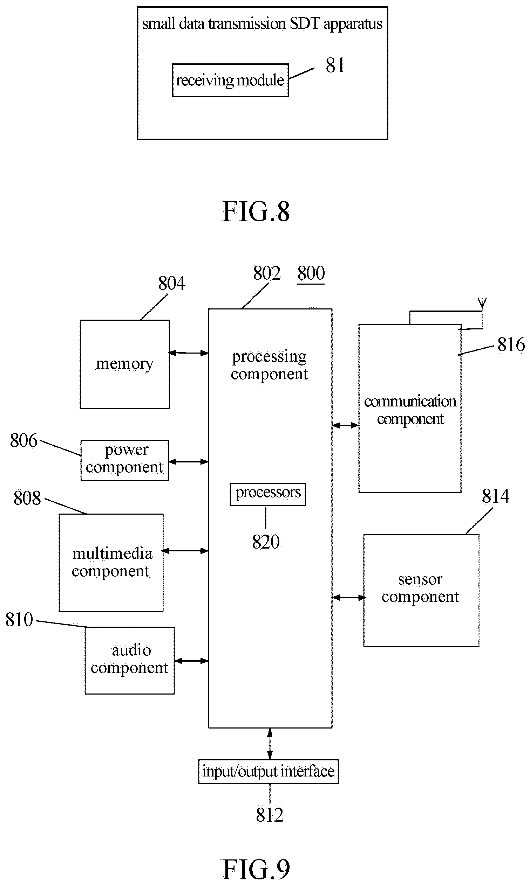

As shown in FIG. 8, a small data transmission SDT apparatus is provided in an embodiment of the present disclosure, wherein the apparatus includes:
a receiving module 81, configured to perform SDT according to configuration information;
wherein, the configuration information is used for indicating a parameter threshold of a trigger condition for triggering SDT.

It should be noted that, those skilled in the art can understand that the method provided in the embodiment of the present disclosure can be executed alone or together with some methods in the embodiment of the present disclosure or some methods in related technologies.

The embodiment of the present disclosure provides a communication device, the communication device including:
a processor; and
a memory for storing instructions executable by the processor;
wherein, the processor is configured to: implement the method applied to any embodiment of the present disclosure when running the executable instructions.

The processor may include various types of storage media, the storage medium is a non-transitory computer storage medium, and can continue to memorize the information stored thereon after the communication device is powered off.

The processor can be connected to the memory through a bus, etc., for reading the executable program stored on the memory.

The embodiment of the present disclosure also provides a computer storage medium, wherein the computer storage medium stores a computer executable program, and the executable program implements the method of any embodiment of the present disclosure when executed by the processor.

Regarding the apparatus in the above embodiments, the specific manner in which each module performs the operation has been described in detail in the embodiments of the method, and will not be elaborated here.

As shown in FIG. 9, an embodiment of the present disclosure provides a structure of a terminal.

Referring to FIG. 9, a terminal 800 is provided by this embodiment. Specifically, the terminal may be a mobile phone, a computer, a digital broadcast terminal, a messaging device, a game console, a tablet device, a medical device, a fitness device, a personal digital assistant, etc.

Referring to FIG. 9, the terminal 800 may include at least one or more of the following components: a processing component 802, a memory 804, a power component 806, a multimedia component 808, an audio component 810, an input/output (I/O) interface 812, a sensor component 814, and a communication component 816.

The processing component 802 typically controls the overall operations of the terminal 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules to facilitate the interaction between the processing component 802 and other components. For example, the processing component 802 can include a multimedia module to facilitate the interaction between the multimedia component 808 and the processing component 802.

The memory 804 is configured to store various types of data to support the operation of the terminal 800. Examples of such data include instructions for any application or method operated on the terminal 800, the contact data, the phone book data, messages, pictures, videos, and the like. The memory 804 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 can include a power management system, one or more power sources, and other components associated with the generation, management, and distribution of power for the terminal 800.

The multimedia component 808 includes a screen providing an output interface between the terminal 800 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also detect the duration time and pressure associated with the touch or swipe action. In some embodiments, the multimedia component 808 includes a front camera and/or a rear camera. When the terminal 800 is in an operation mode, such as a photographing mode or a video mode, the front camera and/or the rear camera can receive external multimedia data. Each of the front camera and the rear camera may be a fixed optical lens system or have focus and optical zoom capability.

The audio component 810 is configured to output and/or input an audio signal. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or sent via the communication component 816. In some embodiments, the audio component 810 also includes a speaker for outputting the audio signal.

The I/O interface 812 provides an interface between the processing component 802 and peripheral interface modules, such as keyboards, a click wheels, buttons, and the like. These buttons may include, but not limited to, a home button, a volume button, a starting button, and a locking button.

The sensor component 814 includes one or more sensors for providing state assessments of various aspects of the terminal 800. For example, the sensor component 814 can detect an open/closed state of the device 800, relative positioning of components, such as the display and the keypad of the terminal 800. The sensor component 814 can also detect a change in position of one component of the terminal 800 or the terminal 800, the presence or absence of user contact with the terminal 800, an orientation, or an acceleration/deceleration of the terminal 800, and a change in temperature of the terminal 800. The sensor component 814 can also include a proximity sensor configured to detect the presence of nearby objects without any physical contact. The sensor component 814 can also include a light sensor, such as a CMOS or CCD image sensor, configured to use in imaging applications. In some embodiments, the sensor component 814 can also include an accelerometer sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as Wi-Fi, 2G, 3G, or a combination thereof. In an example embodiment, the communication component 816 receives broadcast signals or broadcast associated information from an external broadcast management system via a broadcast channel. In an example embodiment, the communication component 816 also includes a near field communication (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In an example embodiment, the terminal 800 may be implemented with one or more application specific integrated circuits (ASIC), digital signal processors (DSP), digital signal processing devices (DSPD), programmable logic devices (PLD), field programmable Gate arrays (FPGA), controllers, microcontrollers, microprocessors or other electronic components, to perform the above methods.

In an example embodiment, a non-transitory computer-readable storage medium including instructions is also provided, such as a memory 804 including instructions, and the above instructions can be executed by the processor 820 of the terminal 800 to complete the above method. For example, the non-transitory computer-readable storage medium can be a ROM, a random access memory (RAM), a CD-ROM, a magnetic tape, a floppy disk, and an optical data storage device.

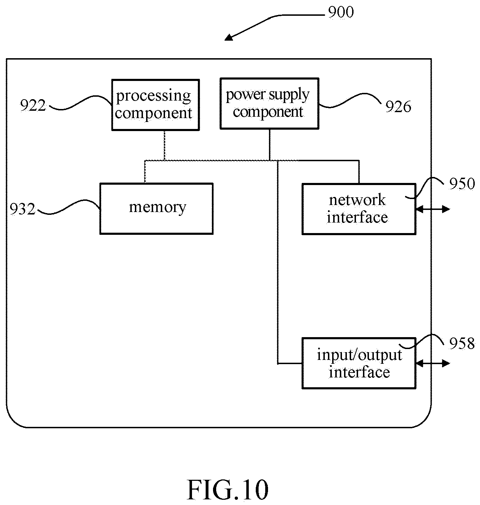

As shown in FIG. 10, a structure of a base station is provided in an embodiment of the present disclosure. For example, the base station 900 may be provided as a network side device 900. Referring to FIG. 10, the base station 900 may include a processing component 922, which further includes one or more processors, and memory resources represented by a memory 932, for storing instructions, such as application programs, that can be executed by processing component 922. An application stored in memory 932 may include one or more modules, each of which corresponds to a set of instructions. In addition, the processing component 922 is configured to execute instructions to execute any of the above methods applied to the base station.

The base station 900 may also include a power supply component 926 configured to perform power management of the base station 900, a wired or wireless network interface 950 configured to connect the base station 900 to the network, and an input/output (I/O) interface 958. The base station 900 may operate based on an operating system stored in the memory 932, such as Windows Server TM, Mac OS X TM, Unix TM, Linux TM, FreeBSD TM or the like.

Other embodiments of the present disclosure will easily occur to those skilled in the art after considering the specification and practicing the disclosure disclosed herein. The present disclosure is intended to cover any variation, use or adaptation of the present disclosure, which follows the general principles of the present disclosure and includes common sense or common technical means in the technical field not disclosed in this disclosure. The specification and embodiments are to be regarded as example only, with the true scope and spirit of the disclosure being indicated by the attached claims.

It should be understood that the present disclosure is not limited to the precise structure described above and shown in the drawings, and various modifications and changes can be made without departing from its scope. The scope of the present disclosure is limited only by the appended claims.

## Claims

1. A small data transmission SDT method, performed by an access network device, and the method comprising:
sending configuration information to a terminal;
wherein, the configuration information is used for indicating a parameter threshold of a trigger condition for triggering SDT.

2. The method according to claim 1, wherein sending configuration information to the terminal comprises at least one of the following:
sending the configuration information to the terminal through a terminal-specific message;
sending the configuration information to the terminal through a broadcast message.

3. The method according to claim 1, wherein the configuration information comprises bearer indication information, used for indicating a data radio bearer DRB or a signaling radio bearer SRB.

4. The method according to claim 3, wherein the configuration information is further used for indicating indication information of whether initiation of SDT is permitted; the SDT comprises mobile originated small data transmission MO SDT and/or mobile terminated small data transmission MT SDT.

5. The method according to claim 1, wherein the parameter threshold comprises at least one of the following:
a reference signal received power RSRP value;
a reference signal received quality RSRQ value; and
a signal to interference and noise ratio SINR value.

6. The method according to claim 1, wherein the parameter threshold comprises at least one of the following:
a first parameter threshold, wherein the first parameter threshold is a threshold for determining whether to trigger mobile terminated small data transmission MT SDT; and
a second parameter threshold, wherein the second parameter threshold is a threshold for determining whether to trigger mobile originated small data transmission MO SDT.

7. The method according to claim 6, wherein the first parameter threshold is equal to the second parameter threshold.

8. The method according to claim 1, wherein
the parameter threshold is a threshold for determining data transmission through a random access process; and/or
the parameter threshold is a threshold for determining data transmission through configure grant CG resources.

9. The method according to claim 1, wherein the configuration information is further used for indicating an uplink resource of SDT, wherein the uplink resource is used for initiating initial access, or the uplink resource is used for sending uplink data.

10. The method according to claim 9, wherein configuration of the uplink resource comprises random access resource information, configure grant resource information and/or demodulation reference signal DMRS information.

11. A small data transmission SDT method, performed by a terminal, and the method comprising:
performing SDT according to configuration information;
wherein, the configuration information is used for indicating a parameter threshold of a trigger condition for triggering SDT.

12. The method according to claim 11, further comprising:
determining the configuration information, wherein determining the configuration information comprises at least one of the following:
determining the configuration information according to a predetermined communication protocol;
determining the configuration information according to information received from an access network device.

13. The method according to claim 12, wherein receiving the configuration information sent by the access network device comprises at least one of the following:
receiving the configuration information sent by the access network device through a terminal-specific message;
receiving the configuration information sent by the access network device through a broadcast message.

14. The method according to claim 11, wherein the configuration information comprises bearer indication information, used for indicating a data radio bearer DRB or a signaling radio bearer SRB.

15. The method according to claim 14, wherein the configuration information further indicates indication information of whether initiation of the SDT is permitted; the SDT comprises mobile originated small data transmission MO SDT and/or mobile terminated small data transmission MT SDT.

16. The method according to claim 11, wherein the parameter threshold comprises at least one of the following:
a reference signal received power RSRP value;
a reference signal received quality RSRQ value; and
a signal to interference and noise ratio SINR value.

17. The method according to claim 11, wherein the parameter threshold comprises at least one of the following:
a first parameter threshold, wherein the first parameter threshold is a threshold for determining whether to trigger mobile terminated small data transmission MT SDT; and
a second parameter threshold, wherein the second parameter threshold is a threshold for determining whether to trigger mobile originated small data transmission MO SDT.

18. The method according to claim 17, wherein the first parameter threshold is equal to the second parameter threshold.

19. The method according to claim 11, wherein the parameter threshold is a threshold for determining data transmission through a random access process; and/or the parameter threshold is a threshold for determining data transmission through configure grant CG resources.

20. The method according to claim 11, wherein the configuration information further indicates an uplink resource of SDT, wherein the uplink resource is used for initiating initial access; or the uplink resource is used for sending uplink data.

21. The method according to claim 20, wherein configuration of the uplink resource comprises random access resource information, configure grant resource information and/or demodulation reference signal DMRS information.

22. The method according to claim 11, wherein performing SDT according to configuration information comprises:
performing SDT according to a trigger condition determined based on the configuration information.

23. The method according to claim 22, wherein the trigger condition comprises at least one of the following:
a first trigger condition, comprising: in response to a signal measurement result of the terminal being greater than or equal to the parameter threshold, performing SDT;
a second trigger condition, comprising: in response to a bearer of the terminal being configured to allow use of MT SDT and MO SDT and the signal measurement result of the terminal being greater than or equal to the parameter threshold, performing SDT based on an uplink resource corresponding to MO SDT;
a third trigger condition, comprising: in response to the configuration information configuring an uplink resource and the signal measurement result of the terminal being greater than or equal to the parameter threshold, performing SDT based on the uplink resource;
a fourth trigger condition, comprising: in response to a bearer of the terminal being configured to allow use of MT SDT and MO SDT, performing SDT based on the uplink resource corresponding to MO SDT; and
a fifth trigger condition, comprising: in response to the configuration information configuring an uplink resource, performing SDT based on the uplink resource.

24. The method according to claim 23, further comprising:
performing a random access process based on a predetermined random access resource, in response to a predetermined condition being satisfied,
wherein, the predetermined condition comprises one of the following:
the signal measurement result of the terminal being smaller than or equal to the parameter threshold;
the number of data transmissions of the terminal being greater than or equal to a quantity threshold; and
expiration of a predetermined timer.

25. The method according to claim 24, wherein the number of transmissions comprises one of the following:
the number of random access preamble transmissions during initial data transmission in an SDT procedure; and
the number of initial data transmissions in the SDT procedure.

26. The method according to claim 24, wherein a start condition of the timer comprises one of the following:
triggering of SDT;
initial uplink data transmission; and
initial random access preamble transmission.

27. The method according to claim 25, wherein a stop condition of the timer comprises one of the following:
reception of a Radio Resource Control RRC state transition instruction;
reception of an acknowledgment message of a random access procedure; and
reception of indication information of data reception completion.

28. The method according to claim 23, further comprising:
ignoring the parameter threshold, in response to configuration of a preset threshold for a data volume of uplink data transmitted using the uplink resource;
wherein, the preset threshold is used to determine the trigger condition for performing SDT based on the uplink resource.

29. The method according to claim 23, wherein a measurement signal corresponding to the signal measurement result comprises one of the following:
a path loss reference signal;
a signal of a designated measurement object;
a signal of a currently resident cell; and
a signal of a cell initiating SDT.

30. The method according to claim 23, wherein a measurement signal corresponding to the signal measurement result is a synchronization signal block SSB or a channel state information reference signal CSI-RS.

31. A small data transmission SDT apparatus, comprising:
a sending module, configured to send configuration information to a terminal;
wherein, the configuration information is used for indicating a parameter threshold of a trigger condition for triggering SDT.

32. A small data transmission SDT apparatus, comprising:
a receiving module, configured to perform SDT according to configuration information;
wherein, the configuration information is used for indicating a parameter threshold of a trigger condition for triggering SDT.

33. A communication device, comprising:
an antenna;
a memory;
a processor, connected to the antenna and the memory respectively, configured to control transmission and reception of the antenna and implement the method provided in any one of claims 1 to 10 or 11 to 30 by executing computer executable instructions stored in the memory.

34. A computer storage medium, having computer executable instructions stored thereon, wherein the computer executable instructions are capable of implementing the method provided in any one of claims 1 to 10 or 11 to 30 after executed by a processor.
